# EUROPÄISCHE PATENTSCHRIFT

(11) **EP 3 999 196 B1**
(45) Veröffentlichungstag und Bekanntmachung des Hinweises auf die Patenterteilung: **30.08.2023**
(21) Anmeldenummer: 21739935.1
(22) Anmeldetag: 18.05.2021
(51) Int. Cl.: A63B 57/20, A63B 71/06, A63B 57/12

(54) **VORRICHTUNG ZUR FIXIERUNG VON GOLF-TEES**
APPARATUS FOR FIXING GOLF TEES
DISPOSITIF DE FIXATION D'UN TEE DE GOLF

(30) Priorität: 18.05.2020 DE 102020003211; 18.05.2020 DE 202020002355 U
(43) Veröffentlichungstag der Anmeldung: 25.05.2022
(73) Patentinhaber: Richter, Tino, 12623 Berlin (DE); Wendland, Kai, 14193 Berlin (DE)
(72) Erfinder: Richter, Tino, 12623 Berlin (DE); Wendland, Kai, 14193 Berlin (DE)
(74) Vertreter: ETL IP Patent- und Rechtsanwaltsgesellschaft mbH
(86) Internationale Anmeldenummer: PCT/DE2021/000099
(87) Internationale Veröffentlichungsnummer: WO 2021/233492

(56) Entgegenhaltungen:
- CN-U- 203 657 784
- GB-A- 2 411 123
- KR-A- 20090 101 602
- US-A1- 2009 318 247
- US-A1- 2013 267 350

## Beschreibung

Die Erfindung betrifft die Fixierung von Auflagen für einen Golfball, insbesondere einen Golf-Tee. Mithin betrifft die vorliegende Erfindung insbesondere eine Vorrichtung für die Fixierung von Golf-Tees.

Ein "Tee" im Golfsport, entsprechend auch "Golf-Tee" oder bspw. "Golftee" genannt, ist ein kleiner Stift aus bspw. einem Holz oder einem Kunststoff bzw. aus einer Verbindung aus beiden vorgenannten Werkstoffen, der typischerweise beim Abschlag in den Boden gesteckt wird und auf den dann der Ball aufgelegt ("aufgeteet") werden darf. Der Ball liegt somit erhöht und ist für gewöhnlich einfacher zu spielen. Das "Aufteen" des Balles ist nur beim ersten Schlag einer jeden Spielbahn erlaubt.

Zur Vollständigkeit und dem Gesamtverständnis halber: Der Abschlagsort an sich, also die rechteckige und meistens erhöhte Rasenfläche zu Beginn jeder Spielbahn, wird für gewöhnlich ebenfalls als "Tee" bezeichnet. Letzteres ist aber nicht direkt auf die vorliegende Erfindung bezogen, die vielmehr das vorbeschriebene stiftähnliche "Golf-Tee" betrifft.

Ein beispielhaftes "normales" Tee ist 2 1/8 Zoll (ca. 5,4 cm) lang. Die Maximallänge ist auf 4 Zoll (10,16 cm) für gewöhnlich beschränkt. Besonders für Abschläge mit dem Driver (Holz 1) werden gerne überlange Tees verwendet. In der kalten Jahreszeit kommen bspw. flache Wintertees aus Kunststoff zum Einsatz, da sich die normalen Tees dann nicht mehr in den harten Boden einstecken ließen.

Derartige Vorrichtungen sollen verhindern, dass der Golf-Tee bei einem unbeabsichtigten Treffer durch den Golfschläger weit wegfliegt und es einer aufwendigen Suche zum Wiederfinden bedarf.

Typischerweise werden u. a. von Golfanfängern Golf-Tees direkt beim Abschlag getroffen und dann nur sehr schwer auffindbar in die Weite, oder bspw. in Bunker und/oder sehen, geschossen. Dies ist ineffizient, eine Materialverschwendung und umweltschädlich; bspw. aufgrund des erhöhten Plastikmülls.

Der Stand der Technik bietet für derartige Vorrichtungen eine Reihe von Lösungsmöglichkeiten an:
In der DE 20 2007 005 698 U1 wird dazu ein Lederband, ein Textilband, ein Kunststoffband etc. vorgeschlagen, das einmal über eine Schlaufenbefestigung mit dem Golf-Tee verbunden ist und dessen anderes Ende mit einem Befestigungsanker versehen ist, der in den Boden gedrückt wird.

Es wird von einer stabilen Fixierung ausgegangen aber auch davon, dass diese sich aus dem Boden herauslösen kann, aber mit der Folge einer größeren Energievernichtung und damit einem kurzen Flugweg.

Das Dokument US 2013 267350 A1 offenbart eine Vorrichtung zur Fixierung von Golf-Tees mittels eines elastischen Bandes, an dem mindestens ein Golf-Tee befestigbar ist, wobei der Golf-Tee einen Tee-Schaft zum Einstecken in das Erdreich und einen daran angeordnetes Plateau für einen Golfball aufweist, wobei das Band in Bandlängsrichtung beabstandet angeordnete Öffnungen aufweist, die bei abgerolltem Band sichtbar und zugängig sind und die das Band durchdringen und in die jeweils ein Tee-Schaft von Golf-Tees kraftschlüssig einsteckbar ist.

Aus der DE 20 2006 013 572 U1 ist es bekannt mehrere Golf-Tees miteinander und mit einem Bodenanker zu verbinden. Der Bodenanker ist gleichzeitig der Aufnehmer für die jeweilige Tülle, d. h. wir haben es hier mit einem geteilten Golf-Tee zu tun und nicht mit einem einstückigen.

Die US 2018/0 326 269 A1 sieht die Anordnung mehrerer Golf-Tees vor, die durch ein gemeinsames Band verbunden sind.

Die Befestigung des Bandes kann über Löcher in den Golf-Tees vorgenommen sein oder das Band wird durch eine über den Tee-Schaft geschobene Hülse zur Erzielung einer Klemmung zwischen Hülse und Tee-Schaft unter Einschluss des Bandes fixiert.

Letztlich soll noch auf die US 2013/0 005 511 A1 verwiesen werden, die einen zurückspulbaren Golf-Tee beschreibt. Das Golf-Tee ist über ein Band mit einer Aufwickelvorrichtung verbunden, die auf- und abspult.

Zumindest der Rückspulvorgang erfolgt dabei gedämpft. Die Verbindung zwischen dem Band und dem Golf-Tee erfolgt über eine Bohrung oder Öse im Golf-Tee.

Die Rückspuleinrichtung kann weiter mit folgenden Elementen ausgerüstet sein: einen *Pitch Mark Repairer*, einen *Ball Marker*, einen *Groove Cleaner*, ein Ersatz-T-Stück, einen Bleistift oder einen *Score Keeper.*

Der wesentliche Nachteil der benannten Vorrichtungen besteht darin, dass spezielle Golf-Tees vorgesehen sind, nämlich versehen mit Bohrungen, Ösen oder auch Klemmhülsen. Des Weiteren ist die Anzahl der Golf-Tees und ihr Abstand zueinander vorgegeben oder der Abstand kann nur durch entknoten und neu verknoten des Bandes mit der z. B. Öse in Grenzen verändert werden. Darüber hinaus sind keine unterschiedlichen Tee-Schäfte händelbar. Das ist wenig nutzerfreundlich.

Eine Aufgabe der Erfindung wird nun im Folgenden beschrieben:
Aufgabe der Erfindung ist es, eine beliebige Anzahl von Golf-Tees mit unterschiedlichen, nahezu frei wählbaren Abständen und beliebigen Schaftdurchmessern zu fixieren. Gelöst wird diese Aufgabe mit den Merkmalen des Anspruches 1. Vorteilhafte Ausgestaltungen sind Gegenstand der Unteransprüche.

Eine weitere Aufgabe der Erfindung liegt darin, über die erfindungsgemäße Vorrichtung zur Golf-Tee Fixierung, die Schlagkraft des Golfschlages auf das Tee in eine Rotationsbewegung der Tee-Fixierung und damit auch des Tee-Bandes umzuwandeln, so dass die Krafteinwirkung auf das Tee schnell abgemildert wird und es in der Tee-Halterung besser verharren lässt, um es eben in der Halterung zu fixieren und nicht wegzuschlagen.

Die erfindungsgemäße Vorrichtung zur Fixierung von Golf-Tees mittels eines auf- und abrollbaren Bandes, das zusammen mit der Auf- und Abrolleinrichtung in einem Gehäuse angeordnet ist und an dem mindestens ein Golf-Tee befestigbar ist, wobei der Golf-Tee einen Tee-Schaft zum Einstecken in das Erdreich und ein daran angeordnetes Plateau für einen Golfball aufweist, sieht vor, dass das Band in Bandlängsrichtung beabstandet angeordnete Öffnungen aufweist, die bei abgerolltem Band sichtbar und zugängig sind, die das Band durchdringen und in die jeweils ein Tee-Schaft eines Golf-Tees kraftschlüssig einsteckbar ist.

In einer Ausführungsform umfasst das Band in Bandlängsrichtung eine oder mehrere vorgenannte Öffnungen, bevorzugt mindestens zwei, noch mehr bevorzugt mindestens drei Öffnungen. Im Falle von mehreren Öffnungen können diese im Durchmesser die gleiche Größe aufweisen oder pro Öffnung einen unterschiedlichen Durchmesser aufweisen. Im Falle von mehreren Öffnungen können diese allesamt gleich beabstandet sein oder unterschiedlich beabstandet sein.

Die Öffnungen können mithin unterschiedliche Abstände aufweisen oder gleiche Abstände oder eine Kombination von gleichen und ungleichen Abständen und durchdringen das Band bevorzugt auf der breiten Bandfläche.

Des Weiteren können die Innenmaße der Öffnungen gleich oder ungleich oder als eine Kombination von gleichen und ungleichen Abmaßen ausgeführt sein.

Durch diese Ausführung der Vorrichtung ist eine beliebige Zahl von Golf-Tees miteinander verbindbar. Der Nutzer kann den für ihn optimalen Anstand zwischen den Golf-Tees wählen und durch den beanspruchten Kraftschluss zwischen dem Rand der Öffnungen und dem Tee-Schaft sind die Golf-Tees so fixiert, dass sie sich bei einem versehentlichen Treffer eines Golf-Tees durch den Golfschläger nicht aus den Band herauslösen.

Zur Erzielung des Kraftschlusses zwischen dem Tee-Schaft und dem Innenrand der jeweiligen Öffnung werden folgende Lösungen favorisiert:
- Der Innenrand von Öffnungen ist gezackt ausgebildet, vorzugsweise sternartig. Beim Durchdringen der Öffnungen biegen sich die Zacken in Einsteckrichtung nach außen, klemmen den Tee-Schaft ein und verhindern das Herausziehen bis zu einer bestimmten Kraft, da diese Herausziehbewegung eine Richtungsänderung der Biegung der Zacken bedeutet. Ein weiterer Vorteil dieser Ausführung besteht darin, dass bei gleichen Öffnungsgrößen Tee-Schäfte mit unterschiedlichen Durchmessern genutzt werden können. Die Durchmesserunterschiede werden durch das Maß der Biegung der Zacken ausgeglichen. Einfach ist auch die Herstellung. Die Öffnungen mit den Zacken können durch Stanzen eingebracht werden.
- Bei einer anderen Lösung sind die Öffnungen schlitzartig oder oval ausgebildet. Dies führt beim Durchstecken der Tee-Schäfte zu Verformungen des Randes der Öffnungen und damit zu Klemmkräften zwischen den Verformungen des Randes der Öffnungen und dem jeweiligen Tee-Schaft. Auch hier können Tee-Schäfte mit unterschiedlichem Durchmesser eingesetzt werden. Die technologische Herstellbarkeit ist ebenfalls einfach.
- Bei einer dritten Lösungsvariante sind die Innenränder der Öffnungen mit einem hochelastischen Material umrandet, das sich beim Durchstecken der Tee-Schäfte vorrangig in der Bandebene ausdehnt und so den jeweiligen Tee-Schaft einspannt. Dabei können Tee-Schäfte mit einem unterschiedlichen Durchmesser eingesetzt werden.

Diese Varianten funktionieren auch bei Tee-Schäften die keinen kreisförmigen Querschnitt aufweisen.

In allen Fällen ist die verbleibende Größe der freien Querschnittsfläche der Öffnungen kleiner als die Querschnittsfläche des einzusteckenden Golf-Tees zu wählen.

Eine weitere Ausgestaltung der Vorrichtung sieht vor, dass das Band an seinem Ende eine Zunge aufweist, die im aufgerollten Zustand des Bandes aus dem Gehäuse herausragt. Diese Zunge dient zum Herausziehen (Abrollen) des Bandes mit der Hand.

In dieser Zunge ist vorteilhafterweise auch mindestens eine Öffnung angeordnet, in die ein Tee-Schaft eines Golf-Tees einsteckbar ist. Die Öffnung verläuft bevorzugt quer oder senkrecht zur Bandlängsrichtung. Das hat mehrere Vorteile. Zum einen steht ein Golf-Tee zur Verfügung, mit dem das Ende des Bandes auf dem Boden fixierbar ist. Zum anderen ist ein Golf-Tee beim Abrollen des Bandes leichter mit der Hand zu greifen, als eine Zunge.

Eine weitere Ausgestaltung der Vorrichtung sieht vor, dass das Band an seinem Ende zusätzlich zu/ oder alternativ zu einer Zunge, ein Endstück aufweist, das ebenfalls im aufgerollten Zustand des Bandes aus dem Gehäuse herausragt. Dieses Endstück, wahlweise mit oder ohne zusätzlicher Zunge, dient einerseits zum Herausziehen (Abrollen) des Bandes mit der Hand, umfasst aber zusätzlich selbst mindestens eine Tee-Öffnung, bevorzugt zwei, noch mehr bevorzugt drei Tee-Öffnungen. Das heißt, mit dem Kontext der Erfindung kann das vorbenannte Endstück eine oder mehrere, bevorzugt zwei, mehr bevorzugt drei, Öffnungen/ Löcher als Tee-Halterung aufweisen. Dabei können die Öffnungen selbst alle gleich oder unterschiedlich gestaltet sein. Bspw. können zwei Öffnungen/ Löcher im Durchmesser kleiner sein als eine dritte Öffnung und zusätzlich nach oben und/oder unten mit einer Ausstülpung versehen sein, und damit andere Tees aufnehmen, als die dritte Öffnung. So ist es denkbar, dass die besagten Öffnungen/ Löcher mit kleinerem Durchmesser und Ausstülpungen nach oben und unten konventionelle, schmale Golf-Tees kraft- und/oder formschlüssig aufnehmen können, wohingegen eine dritte einfache Öffnung/ Loch ohne Ausstülpungen aber mit größerem Durchmesser derart gestaltet ist, um bspw. einen konischen Golf-Tee geeignet aufzunehmen und zu fixieren. Dem Fachmann leuchtet hierbei sofort ein, dass es verschiedenste technische Ausgestaltungsformen der besagten Öffnungen/ Löcher auch am Endstück geben kann, um sie jeweils der bevorzugt zu verwendenden Golf-Tees entsprechend anzupassen, und um so geeignet einen Kraft- und/oder Formschluss und damit eine geeignete Fixierung des Golf-Tees in der erfindungsgemäßen Tee-Halterung herbeizuführen. So können die besagten Öffnungen/ Löcher für die Tee-Fixierung auch unterschiedlich geeignete Wandstärken und/oder Erhöhungen und/oder Materialien aufweisen.

Das benannte Endstück kann aus einem zweckmäßig geeigneten Material hergestellt sein. Bspw. eignet sich ein flexibles bzw. semi-flexibles Material solange das Einfügen und Fixieren eines Golf-Tees mittels Kraft- und/oder Formschlusses ermöglicht ist. Ein geeignetes Material für das Endstück ist ein Silikon und/oder ein Gummimaterial.

In einer Ausführungsform ist das Tee-Band selbst ein flexibles bzw. semi-flexibles Band.

Im Rahmen der Erfindung sind bspw. die Ausführungsformen umfassend ein flexibles Band und ein flexibles Endstück besonders gut geeignet, um die Krafteinwirkung auf einen Golf-Tee beim versehentlichen Treffen desselben in eine Rotationsbewegung des Endstücks und des flexiblen Bandes umzuwandeln, wodurch Energie der Krafteinwirkung aufgebraucht wird und das Golf-Tee verbessert in seiner Öffnung/ in seinem Loch fixiert hält.

Das heißt, die Anordnung aus Band und Endstück sowie die Verwendung eines flexiblen bzw. semi-flexiblen Materials dafür wie bspw. Silikon und/oder Gummi ermöglichen eine besonders bevorzugte Fixierung des Golf-Tees in der erfindungsgemäßen Vorrichtung eines Tee-Bandes.

In einer weiteren Ausführungsform umfasst das erfindungsgemäße Tee-Band eine Halterung, die es erlaubt das Tee-Band bspw. an der Kleidung eines Nutzers über eine geeignete Schnur, über ein geeignetes Band, bspw. Gummiband, oder über ein anderweitig geeignetes Verbindungsmittel zu befestigen. Bspw. kann das Tee-Band über die besagte Halterung auch mittels eines Klips festgeklippt werden.

In einer weiteren Ausführungsform umfasst das Tee-Band eine Vorrichtung, wie bspw. einen Knopf, die/der es erlaubt, dass flexible Tee-Band wieder einzuholen.

Um eine gewisse Anzahl von Golf-Tees zum Einstecken in die Öffnungen des Bandes vorrätig zu haben, sieht eine weitere Ausgestaltung vor, dass das Gehäuse außen über mindestens eine, vorzugsweise mehrere Aufnahmen für den Schaft von Golf-Tees verfügt.

Das Band selbst besteht bevorzugt aus einem elastischen Material und/oder aus gewebtem und elastisch beschichtetem Material.

Weitere vorteilhafte Ausgestaltungen sind darauf gerichtet, die Vorrichtung mit zweckmäßigen Ergänzungen für das Golfspiel zu versehen.

So ist vorgesehen, dass das auf- und abrollbare Band ein Bandmaß ist mit einer Zoll- und/oder metrischen Skalierung. Das erleichtert auch die individuelle Festlegung der Abstände zwischen den Golf-Tees.

Ferner verfügt das Gehäuse über ein Verbindungselement, um es an einem Kleidungsstück oder einem anderen Gegenstand lösbar zu befestigen.

Das Gehäuse bietet auch die Möglichkeit der Anordnung einer Werbefläche. Ebenso kann es mit einer Dosenlibelle versehen sein, um die Tees in zwei Dimensionen auszurichten.

In bekannter Weise kann das Gehäuse einen *Pitch Mark Repairer* und/oder einen *Ball Marker* und/oder einen *Groove Cleaner* aufweisen.

Ferner kann das Gehäuse mit einer ein- und ausschaltbaren LED versehen sein.

Der *Pitch Mark Repairer* kann zusätzlich genutzt werden, um das Gehäuse am Erdboden zu fixieren.

Eine weitere vorteilhafte Ausgestaltung sieht vor, dass die Aufrolleinrichtung im Gehäuse elektromotorisch antreibbar ist. Das hat den Vorteil, dass das Band beim Aufrollen nicht wachsend beschleunigt wird, wie das z.B. bei federangetriebenen Aufrolleinrichtungen der Fall ist, weshalb diese auch mit einem Dämpfer versehen werden.

Um über die notwendige Energie für elektrisch betriebene Komponenten zu verfügen, sieht eine weitere Ausgestaltung vor, dass die beim Auf- und Abrollen des Bandes anfallenden Kräfte und Bewegungen mittels eines Energiewandlers mit zum Aufladen eines Energiespeichers im Gehäuse nutzbar sind.

Die Erfindung soll anhand der Zeichnungen erläutert werden. Es zeigen:
- Fig. 1: das Tee-Band mit Gehäuse und
- Fig. 2: die Befestigung eines Tee-Schaftes in einer Öffnung des Bandes mit gezacktem Rand.
- Fig. 3: eine Ausführungsform des erfindungsgemäßen TeeBandes in leicht seitlich schräger Ansicht von der Unterseite her mit leicht ausgezogenem TeeBand und einem Endstück für beispielhafte 3 Tees, wobei die ersten beiden Tee-Halterungen mit Ausstülpungen und mit einem kleinerem Durchmesser ausgestaltet sind als die letzte, dritte, TeeHalterung, die als bloßes Loch/ Öffnung mit einem größeren Durchmesser ausgestaltet ist. Ferner zeigt Fig. 3 eine Halterungsvorrichtung zur Befestigung des Tee-Bandes an bspw. der Kleidung eines Nutzers.
- Fig. 4: in der oberen Darstellung A das Tee-Band gemäß Fig. 3 jedoch in einer Seitenansicht mit leicht ausgezogenem Tee-Band und dem Endstück gemäß Fig. 3; und in der unteren Darstellung B das Tee-Band gemäß den Figuren 3 und 4A jedoch in einer Darstellung von unten.

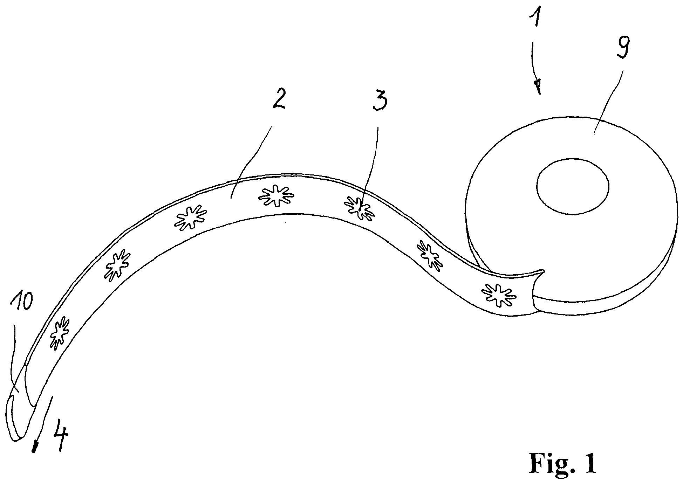

**Fig. 1** zeigt die Vorrichtung zur Fixierung von Golf-Tees 6 mittels eines auf- und abrollbaren Bandes 2, das zusammen mit der Auf- und Abrolleinrichtung in einem Gehäuse 1 angeordnet ist. Das Band 2 ist hier abgerollt, so dass die Öffnungen 3 sichtbar und benutzbar sind zur Fixierung der Golf-Tees 6. Das Gehäuse 1 kann zusätzlich im Erdreich fixiert sein durch einen am Gehäuse 1 angeordneten *Pitch Mark Repairer.*

Die Golf-Tees 6 weisen einen Tee-Schaft 7 zum Einstecken in das Erdreich und ein daran angeordnetes Plateau für einen Golfball auf.

Vor dem Einstecken der Golf-Tees 6 in das Erdreich werden die Tee-Schäfte 7 jeweils durch eine Öffnung 3 des Bandes 2 unter Herstellung von Kraftschluss gesteckt.

Die Öffnungen 3 sind beabstandet in Bandlängsrichtung 4 angeordnet. Dabei weisen die Öffnungen 3 unterschiedliche Abstände auf oder gleiche Abstände oder eine Kombination von gleichen und ungleichen Abständen.

Bei jeder dieser Anordnungen der Öffnungen 3 kann der Nutzer den Abstand und die Anzahl der Golf-Tees 6 so festlegen, wie es für seine Spielweise am optimalsten ist.

Um Golf-Tees 6 mit unterschiedlichen Querschnittsflächen und Querschnittsgrößen einsetzen zu können, unter Beibehaltung des Kraftschlusses zwischen dem Band 2 und den Golf-Tees 6, ist der Innenrand von Öffnungen 3 gezackt ausgebildet, vorzugsweise sternartig, oder die Öffnungen 3 sind schlitzartig oder oval ausgebildet, oder der Innenrand von Öffnungen 3 ist mit einem hochelastischen Material versehen. In allen Fällen ist die verbleibende Größe der freien Querschnittsfläche der Öffnungen 3 kleiner als die Querschnittsfläche des einzusteckenden Golf-Tees 6.

Das Band 2 selbst besteht aus einem elastischen Material und/oder aus gewebtem und elastisch beschichtetem Material, das sich gut aufrollen lässt. Dabei wird die Aufrolleinrichtung im Gehäuse 1 elektromotorisch angetrieben, um ein gleichmäßiges Aufrollen zu gewährleisten. Natürlich sind auch federbelastete Aufrollvorrichtungen möglich.

Damit das Band 2 zum Abrollen mit der Hand greifbar ist, weist es an seinem Ende eine Zunge 10 auf, die im aufgerollten Zustand aus dem Gehäuse 1 herausragt. Diese Zunge 10 kann ebenfalls mit einer oder mehreren Öffnungen 3 zur Aufnahme eines Tee-Schaftes 7 ausgestattet sein.

Das Gehäuse 1 verfügt über ein Verbindungselement, z. B. einen Karabinerhaken, oder auch nur über eine seitliche Öffnung, um es an einem Kleidungsstück, einem Schlüsselanhänger oder einem anderen Gegenstand lösbar zu befestigen.

Eine auf dem Gehäuse 1 angeordnete Werbefläche 9 kann z.B. genutzt werden, um auf den Hersteller oder ein besonderes Turnier hinzuweisen.

Nicht dargestellt sind weitere mögliche Ausstattungen des Gehäuses 1 mit einem *Ball Marker* und/oder einem *Groove Cleaner* und/oder einer ein- und ausschaltbaren LED und/oder einer Dosenlibelle.

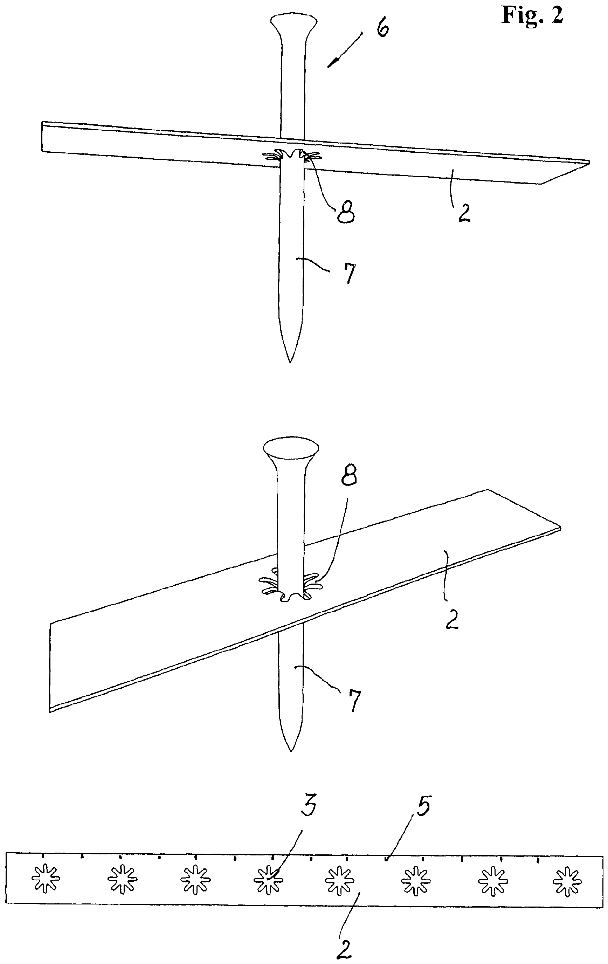

**Fig. 2** zeigt die Befestigung eines Tee-Schaftes 7 in einer Öffnung 3 des Bandes 2, wobei die Öffnung 3 einen Innenrand mit Zacken 8 aufweist, vorzugsweise sternartig angeordnet, in der Draufsicht und den eingesetzten Tee-Schaft 7 in zwei Seitenansichten.

Beim Durchdringen der Öffnung 3 biegen sich die Zacken 8 in Einsteckrichtung nach außen, klemmen den Tee-Schaft 7 ein und verhindern das Herausziehen bis zu einer bestimmten Kraft. Da die Herausziehbewegung eine Richtungsänderung der Biegung der Zacken 8 bedeutet, verstärken sich die Klemmkräfte beim Herausziehen des Tee-Schaftes 7 aus der Öffnung 3.

Weiter wird gezeigt, dass das auf- und abrollbare Band 2 ein Bandmaß ist mit einer Zoll- und/oder mit einer metrischen Skalierung 5. Das kann durch den Nutzer unterstützend für die Wahl der Abstände der benutzten Öffnungen 3 genutzt werden.

Ein weiterer Vorteil dieser Ausführung besteht darin, dass bei gleichen Öffnungsgrößen Tee-Schäfte 7 mit unterschiedlichen Querschnittsflächen genutzt werden können. Die Unterschiede in den Abmaßen bzw. der Form werden durch das Maß der Biegung der Zacken 12 ausgeglichen.

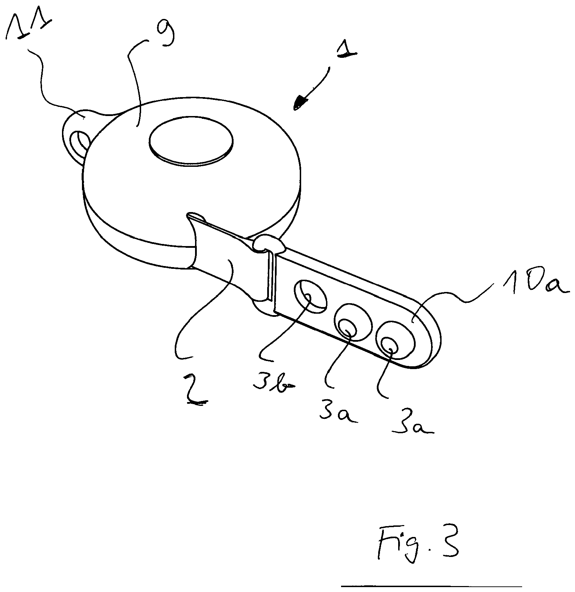

**Fig. 3** zeigt eine besondere Ausführungsform eines Tee-Bandes im Sinne der Figuren 1 und 2. Insoweit als hier nicht anders bestimmt, haben die gleichen Bezugszeichen auch die gleichen Bedeutungen wie oben für die Figuren 1 und 2 benannt. Im Folgenden soll daher nur auf die Besonderheiten eingegangen werden: Das Endstück 10a am leicht ausgerollten Maßband 2 umfasst in Fig. 3 selber beispielhafte drei Tee-Halterungen 3a und 3b. Dabei sind die ersten beiden Tee-Halterungen 3a mit Ausstülpungen nach oben und unten versehen (hier nur Unterseite gezeigt), in die ein Tee mit Kraftschluss fixiert werden kann. Die beiden Öffnungen 3a können entweder gleichartig gestaltet sein mit den Ausstülpungen oder unterschiedlich, bspw. mit verschiedenen Durchmessern oder verschiedenen Bemaßungen der Ausstülpungen. Fig. 3 zeigt ferner eine spezielle Halterungsvorrichtung 11 mittels derer das Tee-Band bspw. an einem Kleidungstück eines Nutzers über eine Art Band, Schnur, Gummiband und/oder eine ein- und ausziehbare Vorrichtung verbunden werden kann.

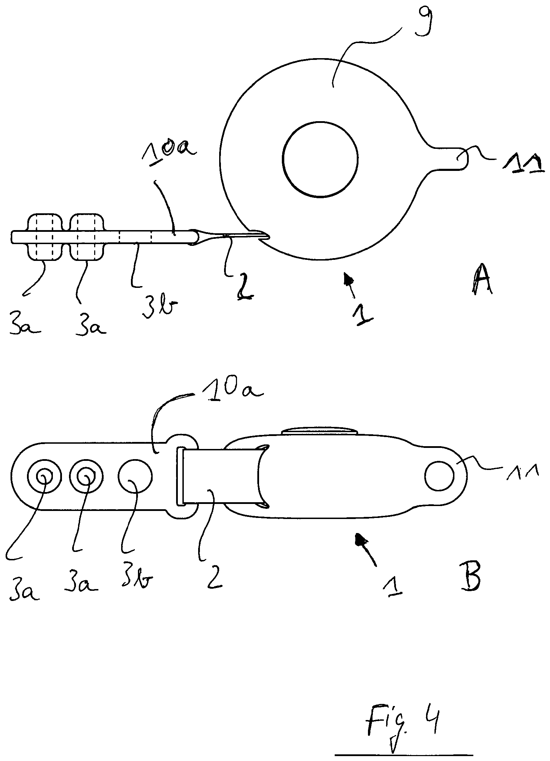

**Fig. 4** zeigt eine besondere Ausführungsform eines Tee-Bandes im Sinne der Figuren 1, 2 und 3; und dies in Seitenansicht (A) als auch in der Unteransicht (B). Insoweit als hier nicht anders bestimmt, haben die gleichen Bezugszeichen auch die gleichen Bedeutungen wie oben für die Figuren 1, 2 und 3 benannt. Im Folgenden soll daher nur auf die Besonderheiten eingegangen werden: Das Endstück 10a am leicht ausgerollten Maßband 2 umfasst in den Figuren 4A und B selber beispielhafte drei Tee-Halterungen 3a und 3b. Dabei sind die ersten beiden Tee-Halterungen 3a mit Ausstülpungen nach oben und unten versehen, in die ein Tee mit Kraftschluss fixiert werden kann. Die beiden Öffnungen 3a können entweder gleichartig gestaltet sein mit den Ausstülpungen oder unterschiedlich, bspw. mit verschiedenen Durchmessern oder verschiedenen Bemaßungen der Ausstülpungen. Fig. 4 zeigt ferner eine spezielle Halterungsvorrichtung 11 mittels derer das Tee-Band bspw. an einem Kleidungstück eines Nutzers über eine Art Band, Schnur, Gummiband und/oder eine ein- und ausziehbare Vorrichtung verbunden werden kann.

### Bezugszeichenliste

- 1: Gehäuse
- 2: Band
- 3: Öffnungen
- 4: Bandlängsrichtung
- 5: Skalierung
- 6: Golf-Tee
- 7: Tee-Schaft
- 8: Zacken
- 9: Werbefläche
- 10: Zunge
- 10a: Endstück

## Patentansprüche

1. Vorrichtung zur Fixierung von Golf-Tees (6) mittels eines auf- und abrollbaren Bandes (2), das zusammen mit der Auf- und Abrolleinrichtung in einem Gehäuse (1) angeordnet ist und an dem mindestens ein Golf-Tee (6) befestigbar ist, wobei der Golf-Tee (6) einen Tee-Schaft (7) zum Einstecken in das Erdreich und einen daran angeordnetes Plateau für einen Golfball aufweist, wobei das Band (2) in Bandlängsrichtung (4) beabstandet angeordnete Öffnungen (3) aufweist, die bei abgerolltem Band (2) sichtbar und zugängig sind und die das Band (2) durchdringen und in die jeweils ein Tee-Schaft (7) von Golf-Tees (6) kraftschlüssig einsteckbar ist.

2. Vorrichtung nach Anspruch 1, **dadurch gekennzeichnet, dass**
das auf- und abrollbare Band (2) ein Bandmaß ist mit einer Zoll- und/oder metrischen Skalierung (5).

3. Vorrichtung nach Anspruch 1 oder 2, **dadurch gekennzeichnet, dass**
das Band (2) aus einem elastischen Material und/oder aus gewebtem und elastisch beschichtetem Material besteht.

4. Vorrichtung nach einem der Ansprüche 1 bis 3, **dadurch gekennzeichnet, dass**
der Innenrand von Öffnungen (3) gezackt ausgebildet ist, vorzugsweise sternartig.

5. Vorrichtung nach einem der Ansprüche 1 bis 4, **dadurch gekennzeichnet, dass**
Öffnungen (3) schlitzartig oder oval ausgebildet sind.

6. Vorrichtung nach einem der Ansprüche 1 bis 5, **dadurch gekennzeichnet, dass**
der Innenrand von Öffnungen (3) mit einem hochelastischen Material umrandet ist, das unter Beibehaltung des Kraftschlusses Tee-Schäfte (7) mit unterschiedlichem Querschnitt aufzunehmen vermag.

7. Vorrichtung nach einem der Ansprüche 1 bis 6, **dadurch gekennzeichnet, dass**
die Öffnungen (3) unterschiedliche Abstände aufweisen oder gleiche Abstände oder eine Kombination von gleichen und ungleichen Abständen.

8. Vorrichtung nach einem der Ansprüche 1 bis 7, **dadurch gekennzeichnet, dass**
die Innenmaße der Öffnungen (3) gleich oder ungleich ist oder als eine Kombination von gleichen und ungleichen Abmaßen ausgeführt sind.

9. Vorrichtung nach einem der Ansprüche 1 bis 8, **dadurch gekennzeichnet, dass**
im aufgerollten Zustand eine Zunge (10) des Bandes (2) aus dem Gehäuse (1) herausragt, die zum Herausziehen des Bandes (2) per Hand aus dem Gehäuse (1) dient und in dieser Zunge (10) ebenfalls mindestens eine Öffnung (3) zur Aufnahme des Schaftes (7) eines Golf-Tees (6) angeordnet ist.

10. Vorrichtung nach einem der Ansprüche 1 bis 9, **dadurch gekennzeichnet, dass**
das Gehäuse (1) außen über mindestens eine Aufnahme für den Schaft (7) eines Golf-Tees (6) verfügt.

11. Vorrichtung nach einem der Ansprüche 1 bis 10, **dadurch gekennzeichnet, dass**
das Gehäuse (1) über ein Verbindungselement oder eine seitliche Öffnung verfügt, um es an einem Kleidungsstück, einem Schlüsselanhänger oder einem anderen Gegenstand lösbar zu befestigen.

12. Vorrichtung nach einem der Ansprüche 1 bis 11, **dadurch gekennzeichnet, dass**
auf dem Gehäuse (1) eine Werbefläche (9) angeordnet ist.

13. Vorrichtung nach einem der Ansprüche 1 bis 12, **dadurch gekennzeichnet, dass**
das Gehäuse (1) einen *Pitch Mark Repairer* und/oder einen *Ball Marker* und/oder einen *Groove Cleaner* und/oder eine ein- und ausschaltbare LED und/oder eine Dosenlibelle aufweist.

14. Vorrichtung nach einem der Ansprüche 1 bis 13, **dadurch gekennzeichnet, dass**
die Aufrolleinrichtung im Gehäuse (1) elektromotorisch antreibbar ist.

15. Vorrichtung nach einem der Ansprüche 1 bis 14, **dadurch gekennzeichnet, dass**
die beim Auf- und Abrollen des Bandes (2) anfallenden Kräfte und Bewegungen mittels eines Energiewandlers zum Aufladen eines Energiespeichers des Gehäuses (1) nutzbar sind.

## Claims

1. An apparatus for fixing golf tees (6) by means of a tape (2) that can be wound and unwound, which tape is arranged together with the winding and unwinding device in a housing (1) and to which at least one golf tee (6) can be fastened, wherein the golf tee (6) has a tee shaft (7) for insertion into the ground and a plateau arranged thereon, for a golf ball, wherein
the tape (2) has openings (3) arranged spaced apart in the tape longitudinal direction (4), which openings are visible and accessible when the tape (2) is unwound and which penetrate the tape (2) and into each of which a tee shaft (7) of a golf tee (6) can be frictionally inserted.

2. The apparatus according to Claim 1, **characterized in that** the tape (2) which can be wound and unwound is a tape measure with an inch and/or metric scale (5).

3. The apparatus according to Claim 1 or 2, **characterized in that**
the tape (2) consists of an elastic material and/or of woven and elastically coated material.

4. The apparatus according to any one of Claims 1 to 3, **characterized in that**
the inner edge of the openings (3) is designed to be serrated, preferably star-like.

5. The apparatus according to any one of Claims 1 to 4, **characterized in that**
the openings (3) are designed to be slit-like or oval.

6. The apparatus according to any one of Claims 1 to 5, **characterized in that**
the inner edge of the openings (3) is surrounded by a highly elastic material which, while retaining the frictional connection, is able to receive tee shafts (7) of different cross-section.

7. The apparatus according to any one of Claims 1 to 6, **characterized in that**
the openings (3) have different spacings or equal spacings or a combination of equal and unequal spacings.

8. The apparatus according to any one of Claims 1 to 7, **characterized in that**
the internal dimensions of the openings (3) are equal or unequal or are designed as a combination of equal and unequal dimensions.

9. The apparatus according to any one of Claims 1 to 8, **characterized in that**
in the wound state, a tongue (10) of the tape (2) projects out of the housing (1), which tongue is used to withdraw the tape (2) from the housing (1) by hand, and at least one opening (3) for receiving the shaft (7) of a golf tee (6) is likewise arranged in said tongue (10).

10. The apparatus according to any one of Claims 1 to 9, **characterized in that**
the housing (1) has at least one receptacle for the shaft (7) of a golf tee (6).

11. The apparatus according to any one of Claims 1 to 10, **characterized in that**
the housing (1) has a connecting element or a lateral opening in order to detachably fasten it to a piece of clothing, a key fob or another object.

12. The apparatus according to any one of Claims 1 to 11, **characterized in that**
an advertising space (9) is arranged on the housing (1).

13. The apparatus according to any one of Claims 1 to 12, **characterized in that**
the housing (1) has a pitch mark repairer and/or a ball marker and/or a groove cleaner and/or an LED that can be switched on and off and/or a spirit level.

14. The apparatus according to any one of Claims 1 to 13, **characterized in that**
the winding device in the housing (1) can be driven by an electric motor.

15. The apparatus according to any one of Claims 1 to 14, **characterized in that**
the forces and movements occurring when the tape (2) is wound and unwound can be used to charge an energy store of the housing (1) by means of an energy converter.

## Revendications

1. Dispositif pour fixer des tees de golf (6) au moyen d'une bande (2) enroulable et déroulable, qui est agencée conjointement avec l'appareil d'enroulement et de déroulement dans un boîtier (1) et sur laquelle peut être fixé au moins un tee de golf (6), le tee de golf (6) présentant une tige de tee (7) destinée à être enfoncée dans le sol et un plateau agencé sur celle-ci pour une balle de golf,
la bande (2) présentant des ouvertures (3) agencées à distance dans la direction longitudinale de la bande (4), qui sont visibles et accessibles lorsque la bande (2) est déroulée, et
qui traversent la bande (2) et dans chacune desquelles une tige de tee (7) de tees de golf (6) peut être insérée par adhérence.

2. Dispositif selon la revendication 1, **caractérisé en ce que** la bande enroulable et déroulable (2) est un mètre à ruban avec une graduation en pouces et/ou métrique (5).

3. Dispositif selon la revendication 1 ou 2, **caractérisé en ce que**
la bande (2) est constituée d'un matériau élastique et/ou d'un matériau tissé et revêtu élastiquement.

4. Dispositif selon l'une quelconque des revendications 1 à 3, **caractérisé en ce que**
le bord intérieur d'ouvertures (3) est configuré sous forme dentelée, de préférence en forme d'étoile.

5. Dispositif selon l'une quelconque des revendications 1 à 4, **caractérisé en ce que**
des ouvertures (3) sont configurées en forme de fente ou ovales.

6. Dispositif selon l'une quelconque des revendications 1 à 5, **caractérisé en ce que**
le bord intérieur d'ouvertures (3) est bordé d'un matériau hautement élastique qui peut recevoir des tiges de tee (7) de sections transversales différentes tout en conservant l'adhérence.

7. Dispositif selon l'une quelconque des revendications 1 à 6, **caractérisé en ce que**
les ouvertures (3) présentent des distances différentes ou des distances égales ou une combinaison de distances égales et inégales.

8. Dispositif selon l'une quelconque des revendications 1 à 7, **caractérisé en ce que**
les dimensions intérieures des ouvertures (3) sont égales ou inégales ou sont réalisées sous la forme d'une combinaison de dimensions égales et inégales.

9. Dispositif selon l'une quelconque des revendications 1 à 8, **caractérisé en ce que**
à l'état enroulé, une languette (10) de la bande (2) dépasse du boîtier (1), qui sert à extraire manuellement la bande (2) du boîtier (1), et dans cette languette (10) est également agencée au moins une ouverture (3) destinée à recevoir la tige (7) d'un tee de golf (6).

10. Dispositif selon l'une quelconque des revendications 1 à 9, **caractérisé en ce que**
le boîtier (1) dispose extérieurement d'au moins un logement pour la tige (7) d'un tee de golf (6).

11. Dispositif selon l'une quelconque des revendications 1 à 10, **caractérisé en ce que**
le boîtier (1) dispose d'un élément de liaison ou d'une ouverture latérale pour le fixer de manière amovible à un vêtement, à un porte-clés ou à un autre objet.

12. Dispositif selon l'une quelconque des revendications 1 à 11, **caractérisé en ce que**
une surface publicitaire (9) est agencée sur le boîtier (1) .

13. Dispositif selon l'une quelconque des revendications 1 à 12, **caractérisé en ce que**
le boîtier (1) présente un *Pitch Mark Repairer* et/ou un *Ball Marker* et/ou un *Groove Cleaner* et/ou une LED pouvant être activée ou désactivée et/ou un niveau à bulle.

14. Dispositif selon l'une quelconque des revendications 1 à 13, **caractérisé en ce que**
l'appareil d'enroulement dans le boîtier (1) peut être entraîné par un moteur électrique.

15. Dispositif selon l'une quelconque des revendications 1 à 14, **caractérisé en ce que**
les forces et les mouvements générés lors de l'enroulement et du déroulement de la bande (2) peuvent être utilisés au moyen d'un convertisseur d'énergie pour charger un accumulateur d'énergie du boîtier (1).
